# FASCICULE DE BREVET EUROPEEN

(11) **EP 3 344 485 B1**
(45) Date de publication et mention de la délivrance du brevet: **01.09.2021**
(21) Numéro de dépôt: 16756685.0
(22) Date de dépôt: 23.08.2016
(51) Int. Cl.: B60K 11/08

(54) **DISPOSITIF D'OBTURATION D'ENTRÉE D'AIR DE FACE AVANT DE VÉHICULE AUTOMOBILE ET MODULE DE FACE AVANT POUR VÉHICULE AUTOMOBILE**
VORRICHTUNG ZUM ABDICHTEN EINES FRONTLUFTEINLASSES EINES KRAFTFAHRZEUGS UND FRONTMODUL FÜR EIN KRAFTFAHRZEUG
DEVICE FOR SEALING A FRONT-END AIR INTAKE OF A MOTOR VEHICLE AND FRONT-END MODULE FOR A MOTOR VEHICLE

(30) Priorité: 03.09.2015 FR 1558189
(43) Date de publication de la demande: 11.07.2018
(73) Titulaire: Valeo Systemes Thermiques, 78320 Le Mesnil Saint Denis (FR)
(72) Inventeur: THULLIER, Christophe, 78180 Montigny-le-Bretonneux (FR); NGUYEN, Dinh-Luyen, 78180 Montigny-le-Bretonneux (FR); ARAB, Karim, 92320 Chatillon (FR)
(74) Mandataire: Tran, Chi-Hai
(86) Numéro de dépôt international: PCT/EP2016/069909
(87) Numéro de publication internationale: WO 2017/036861

(56) Documents cités:
- EP-A1- 2 080 658
- WO-A1-2016/030588
- DE-U1-202004 010 030

## Description

La présente invention concerne les dispositifs d'obturation et plus précisément un dispositif d'obturation d'entrée d'air de face avant de véhicule automobile ainsi qu'un module de face avant pour véhicule automobile. Un dispositif d'obturation selon le préambule de la revendication 1 est connu du document EP 2 080 658 A1.

Le document WO2016/030588 est considéré état de la technique selon l'article 54(3) CBE.

Les faces avant de véhicules automobiles sont généralement composées de deux entrées d'air principales dites voie haute et voie basse séparées par une poutre pare-choc. Derrière cette poutre pare-choc sont généralement placés les échangeurs de chaleur du véhicule automobile, comme par exemple celui utilisé pour la climatisation de l'habitacle ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur et ainsi d'optimiser l'efficacité de ces échangeurs de chaleur en fonction des besoins. De plus, à grande vitesse, les volets en position d'obturation permettent de diminuer le coefficient de traînée du véhicule et ainsi d'améliorer son aérodynamisme.

Généralement, le dispositif permettant le passage d'une position d'obturation à une position d'ouverture des volets comporte un actionneur qui peut être mécanique, électrique ou encore pneumatique, faisant pivoter les volets en synchronisme au moyen d'une bielle de pivotement.

Lors de chocs violent par exemple pendant un accident, le dispositif d'obturation se brise en raison de mouvements de déformation, notamment de la poutre pare-choc, et ledit dispositif d'obturation, plus particulièrement les volets de ce dernier, risque d'entrer en contact avec les échangeurs de chaleur qui sont situés derrière lui. Suite à un choc trop violent, le dispositif d'obturation endommage les échangeurs de chaleur et augmente ainsi les coûts de réparations du véhicule automobile.

Un des buts de la présente invention est donc de remédier au moins partiellement aux inconvénients de l'art antérieur et de proposer un dispositif d'obturation amélioré.

La présente invention concerne donc un dispositif d'obturation pour entrée d'air de face avant de véhicule automobile, comprenant :
- un cadre support,
- au moins un volet pivotant autour d'un axe de pivotement horizontal entre une position d'obturation et une position d'ouverture, ledit au moins un volet étant installé au sein du cadre support, le cadre support comprenant des moyens de liaison avec ledit au moins un volet au niveau d'une zone de liaison, et
- au moins un élément de commande (13) pilotant le positionnement du ou des volets.

Selon l'invention, le cadre support comporte des portions pré-découpées à proximité d'au moins un moyen de liaison.

Ces portions pré-découpées sont des zones de fragilisation qui lors d'un choc, et d'une poussée au niveau des volets ou du cadre support, peuvent céder et permettre un mouvement des pièces les unes par rapport aux autres. Par exemple, si la face avant du véhicule est enfoncée, le dispositif d'obturation dans son ensemble recule vers l'intérieur du véhicule automobile et les volets risquent alors, lors de ce mouvement vers l'intérieur, d'entrer en contact avec les échangeurs de chaleur. Lorsque les volets entrent en contact avec les échangeurs de chaleur et que le mouvement de recul continue, les portions pré-découpées lâchent alors, absorbant ainsi de l'énergie, et évitent que lesdits volets n'endommagent lesdits échangeurs de chaleurs. Les échangeurs de chaleurs restent alors relativement intacts suite au choc grâce à la présence des portions pré-découpées sur le cadre support. Le véhicule reste ainsi fonctionnel et les coûts de réparations sont également moins importants.

Selon un aspect de l'invention, le dispositif d'obturation comporte au moins deux ensembles de volets et que le cadre support comporte au moins un montant de maintien fixé à au moins une traverse dudit cadre support, l'au moins une traverse comportant des portions pré-découpées à proximité d'au moins un montant de maintien.

Selon un autre aspect de l'invention, le cadre support comporte en outre des portions pré-découpées à proximité des moyens de liaison entre ledit cadre support et l'au moins un élément de commande.

Selon l'invention, le cadre support comporte au moins un moyen de retenue des éléments aptes à se détacher par rupture au niveau des portions pré-découpées.

Selon un autre aspect de l'invention, le moyen de retenue est une butée.

Selon un autre aspect de l'invention, le moyen de retenue est un matériau élastomère recouvrant les portions pré-découpées.

Selon un autre aspect de l'invention, les portions pré-découpées sont des orifices traversant le cadre support et disposés en pointillés.

Selon un autre aspect de l'invention, les orifices traversant ont forme de segments alignés.

L'invention concerne également un module de face avant pour véhicule automobile comprenant un dispositif d'obturation tel que décrit précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation ;
- la figure 2 montre une représentation schématique en perspective d'un élément de commande ;
- la figure 3 montre une représentation schématique en perspective de la zone de liaison comportant des pré-découpes ;
- la figure 4 montre une représentation schématique en vue de face d'un élément de commande ;
- la figure 5 montre une représentation schématique en vue de dessus de la zone de liaison comportant des pré-découpes selon un premier mode de réalisation ; de l'invention;
- la figure 6. montre une représentation schématique en vue de dessus de la zone de liaison comportant des pré-découpes selon un deuxième mode de réalisation de l'invention.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

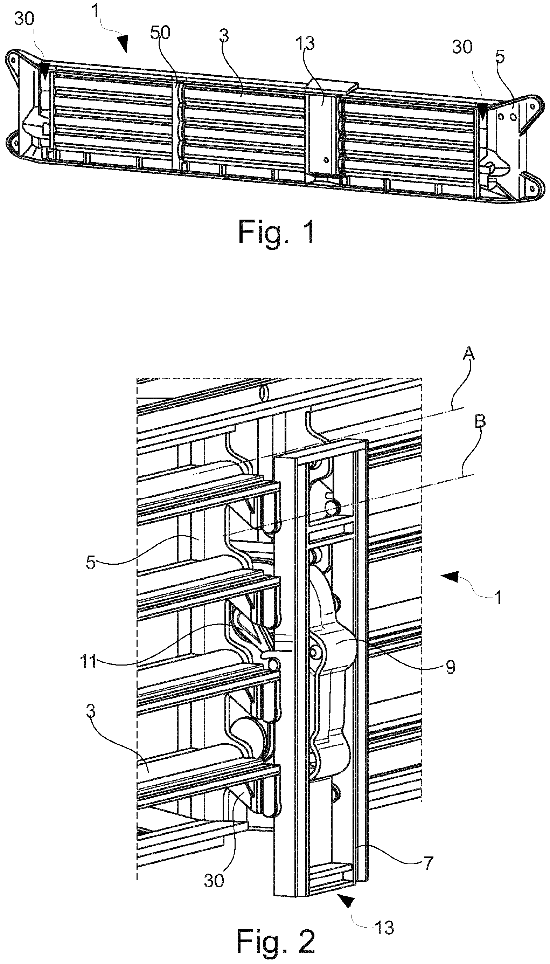

La figure 1 montre une représentation schématique en perspective d'un dispositif d'obturation en position d'obturation. Cette figure 1 montre plus exactement la face externe dudit dispositif d'obturation 1, c'est-à-dire la face dirigée vers l'extérieur du véhicule automobile.

Ledit dispositif d'obturation 1 comporte un cadre support 5 comprenant notamment une traverse supérieure, une traverse inférieure et au moins deux montants latéraux reliant lesdites traverses. Au sein dudit cadre support 5 est installé au moins un volet 3. Lorsqu'il y a une pluralité de volets 3, ces derniers forment des rangs de volets 3 parallèles entre eux et qui forment un ensemble de volets 3. A l'une des extrémités du ou de l'ensemble de volets 3, est placé un élément de commande 13 permettant la rotation du ou des volets 3 entre une position d'ouverture (par exemple représentée en figure 2), où le ou les volets 3 sont disposés de sorte qu'un flux d'air puisse traverser le dispositif d'obturation 1, notamment à l'intérieur du cadre support 5, et une position d'obturation illustrée à la figure 1, où le ou les volets sont agencés de sorte qu'un flux d'air ne puisse pas traverser le dispositif d'obturation 1.

Comme illustré sur la figure 1, il est possible d'avoir un dispositif d'obturation 1 d'une entrée d'air de face avant de véhicule automobile comportant plusieurs ensembles de volets 3 s'étendant sur toute la largeur du cadre support 5. Les ensembles de volets 3 peuvent ainsi être séparés par un élément de commande 13 afin d'assurer leur rotation synchrone ou bien par des montants de maintien 50. Le ou les montants de maintien 50 sont notamment fixés à au moins une traverse du cadre support 5. Les montants de maintien 50 peuvent au contraire assurer une continuité de matière avec les traverses dudit cadre support 5.

Comme le montre la figure 2, l'élément de commande 13 comporte notamment une bielle 7 de pivotement reliée aux volets 3 par une nervure 30 perpendiculaire auxdits volet 3, généralement venant de matière avec lesdits volets 3 et portant un axe de liaison B.

L'élément de commande 13 comporte également un actionneur 9. L'actionneur 9 peut être électrique, comme par exemple un moteur électrique ou encore pneumatique, comme par exemple un vérin. Ledit actionneur 9 applique à la bielle 7 de pivotement un mouvement de translation vers le haut ou vers le bas, ici au moyen d'un levier 11.

Les volets 3 peuvent pivoter autour d'un axe de pivotement A défini par leur zone de liaison 30 avec le cadre support 5. Le volet 3 est relié au cadre support 5 par un moyen de liaison au niveau de la zone de liaison 30, le moyen de liaison étant par exemple, un ergot et une rainure de formes complémentaires. L'axe de liaison B entre les volets 3 et la bielle 7, étant excentré par rapport à l'axe de pivotement A, un déplacement vers le haut ou vers le bas de la bielle 7, sous l'action de l'actionneur 9, entraîne le pivotement des volets 3 autour de l'axe de pivotement A et donc le passage desdits volets 3 d'une position à une autre.

Tous les volets 3 étant reliés à la même bielle 7 de pivotement, le passage d'une position d'ouverture à une position d'obturation est synchrone pour tous lesdits volets 3. Il est également possible que l'ensemble ne comporte qu'un seul volet 3.

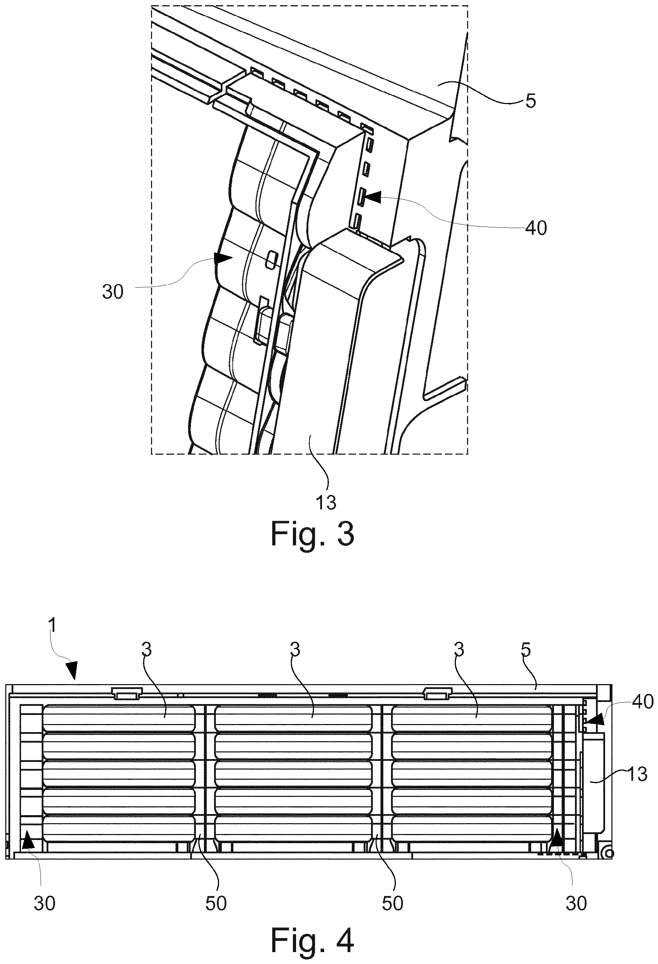

Comme illustré à la figure 3, au niveau des zones de liaison 30, et notamment à proximité des moyens de liaison, entre le cadre support 5 et le ou les volets 3, ledit cadre support 5 comporte des portions pré-découpées 40. Ces portions pré-découpées 40 sont des zones de fragilisation, ou des zones fusibles, qui lors d'un choc, et d'une poussée au niveau des volets 3 ou du cadre support 5, sont aptes à céder et permettre ainsi un mouvement des pièces les unes par rapport au autres. En d'autres termes, les portions pré-découpées 40 permettent un mouvement progressif, saccadé ou encore par pallier du ou des volets 3. Par exemple, si la face avant du véhicule est enfoncée, le dispositif d'obturation 1 dans son ensemble va reculer vers l'intérieur du véhicule automobile et les volets 3 risquent, lors de ce mouvement vers l'intérieur, d'entrer en contact avec les échangeurs de chaleur. Lorsque les volets 3 entrent en contact avec les échangeurs de chaleur et que le mouvement de recul continue, les portions pré-découpées 40 cèdent, absorbant de l'énergie, et limitent ainsi que lesdits volets 3 n'endommagent lesdits échangeurs de chaleurs. Les échangeurs de chaleurs restent alors relativement intactes suite au choc du fait de la présence des portions pré-découpées 40 sur le cadre support 5. Le véhicule reste ainsi fonctionnel et les coûts de réparations sont également être moins importants.

Les portions pré-découpées 40 sont de préférence des orifices traversants le cadre support 5 et disposés en pointillés. La longueur et l'espacement de ces orifices définissent la valeur de la force pour laquelle il y aura rupture. Comme le montre la figure 3, les orifices traversants peuvent avoir une forme de segments alignés, et notamment les orifices traversants sont de forme rectangulaires et étant alignés. Il est cependant tout à fait possible d'imaginer des formes différentes, par exemple des points ou des triangles, sans pour autant sortir du cadre de l'invention.

Au niveau des montants de maintien 50, les portions pré-découpées 40 sont réalisées au niveau de la liaison entre le montant de maintien 50 et les traverses du cadre support 5. Les portions pré-découpées 40 peuvent par exemple être réalisées sur les traverses du cadre support 5 ou alors directement sur le montant de maintien 50.

L'élément de commande 13, comme illustré sur la figure 1, peut être placé sur un montant de maintien 50. Il peut au contraire être placé proche du cadre support 5, et par exemple être fixé au niveau d'un des montant latéraux, comme illustré aux figures 3 et 4. La ou les zones de liaison entre ledit cadre support 5 et l'au moins un élément de commande 13 comportent en outre des portions pré-découpées 40, notamment à proximité des moyens de liaison entre le cadre support 5 et l'élément de commande 13, de sorte que l'élément de commande 13 puisse se détacher du cadre support 5 en cas de choc tout en restant solidaire des volets 3. Sur la figure 3, l'élément de commande 13 n'est représenté que par un capot de protection. Les moyens de liaison par exemple correspondent à un ergot et une rainure de formes complémentaires.

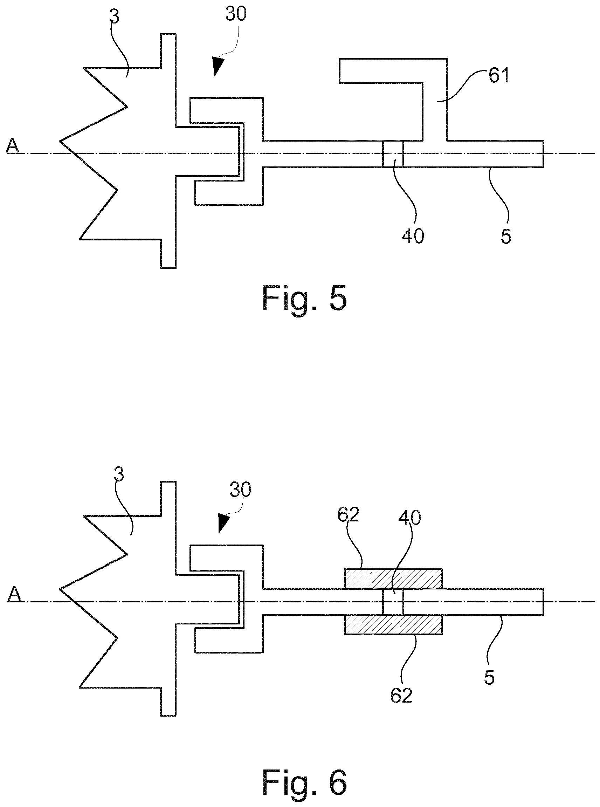

Comme illustré aux figures 5 et 6, le cadre support 5 comporte au moins un moyen de retenue 61, 62 des éléments aptes à se détacher par rupture au niveau des portions pré-découpées 40. Ces moyens de retenue 61, 62 permettent que le ou les volets 3 ainsi que le ou les éléments de commande 13 puissent se déplacer en cas de choc du fait de la rupture des portions pré-découpées 40, mais que ces derniers soient tout de même limités dans leurs déplacements.

Comme le montre la figure 5, le moyen de retenue 61, 62 peut être une butée 61. Cette butée 61 assure une continuité de matière avec le cadre support 5 ou bien être fixée sur ce dernier. Ladite butée 61 et peut avoir également une forme en «L» surplombant les portions pré-découpées 40. Suivant la direction dans laquelle l'on veut limiter les déplacements du ou des volets 3 et du ou des élément de commande 13, ladite butée 61 peut être présente sur la face intérieure du cadre support 5, c'est-à-dire du coté faisant face à l'intérieure du véhicule, ou alors sur la face extérieure du cadre support 5, c'est-à-dire du coté faisant face à l'extérieure du véhicule. Il peut également y avoir des butés 61 présentent sur les deux faces du cadre support 5.

Selon un autre mode de réalisation illustré à la figure 6, le moyen de retenue 61, 62 peut être un matériau élastomère 62 recouvrant les portions pré-découpées 40. A l'instar d'une butée 61, le matériau élastomère 62 peut être présent sur la face intérieure du cadre support 5, c'est-à-dire du coté faisant face à l'intérieure du véhicule, ou alors sur la face extérieure du cadre support 5, c'est-à-dire du coté faisant face à l'extérieure du véhicule. Il peut également y avoir un matériau élastomère 62 présent sur les deux faces du cadre support 5, comme illustré sur la figure 6. Le matériau élastomère 62 peut par exemple être un élastomère thermoplastique (TPE) et être appliqué par surmoulage du cadre support 5.

Ainsi, on voit bien que du fait de la présence des portions pré-découpées 40, le dispositif d'obturation 1 permet de mieux encaisser les chocs violents lors d'accidents et permet notamment de conserver les échangeurs des chaleurs fonctionnels même suite au choc.

## Revendications

1. Dispositif d'obturation (1) pour entrée d'air de face avant de véhicule automobile, comprenant :
■ un cadre support (5),
■ au moins un volet (3) pivotant autour d'un axe de pivotement horizontal (A) entre une position d'obturation et une position d'ouverture, ledit au moins un volet (3) étant installé au sein du cadre support (5), le cadre support (5) comprenant des moyens de liaison avec ledit au moins un volet (3) au niveau d'une zone de liaison (30),
■ au moins un élément de commande (13) pilotant le positionnement du ou des volets (3), le cadre support (5) comportant des portions pré-découpées (40) à proximité d'au moins un moyen de liaison, **caractérisé en ce que** le cadre support (5) comporte au moins un moyen de retenue (61, 62) des éléments aptes à se détacher par rupture au niveau des portions pré-découpées (40).

2. Dispositif d'obturation (1) selon la revendication 1, **caractérisé en ce qu'**il comporte au moins deux ensembles de volets (3) et que le cadre support (5) comporte au moins un montant de maintien (50) fixé à au moins une traverse dudit cadre support (5), l'au moins une traverse comportant des portions pré-découpées (40) à proximité d'au moins un montant de maintien (50).

3. Dispositif d'obturation (1) selon l'une des revendications précédentes, **caractérisé en ce que** le cadre support (5) comporte en outre des portions pré-découpées (40) à proximités des moyens de liaison entre ledit cadre support (5) et l'au moins un élément de commande (13).

4. Dispositif d'obturation (1) selon l'une des revendications précédentes, **caractérisé en ce que** le moyen de retenue (61, 62) est une butée (61).

5. Dispositif d'obturation (1) selon l'une des revendications 1 à 3, **caractérisé en ce que** le moyen de retenue (61, 62) est un matériau élastomère (62) recouvrant les portions pré-découpées (40).

6. Dispositif d'obturation (1) selon l'une des revendications précédentes, **caractérisé en ce que** les portions pré-découpées (40) sont des orifices traversant le cadre support (5) et disposés en pointillés.

7. Module de face avant pour véhicule automobile comprenant un dispositif d'obturation (1) selon l'une des revendications précédentes.

## Patentansprüche

1. Verschlussvorrichtung (1) für Frontlufteintritt eines Kraftfahrzeugs umfassend:
■ einen Halterahmen (5),
■ mindestens eine Klappe (3), die um eine horizontale Schwenkachse (A) zwischen einer Verschlussposition und einer offenen Position schwenkt, wobei die mindestens eine Klappe (3) innerhalb des Halterahmens (5) eingebaut ist, wobei der Halterahmen (5) Mittel zur Verbindung mit der mindestens einen Klappe (3) an einem Verbindungsbereich (30) umfasst,
■ mindestens ein Steuerelement (13), das die Positionierung der Klappe (n) (3) steuert,
wobei der Halterahmen (5) vorab herausgetrennte Abschnitte (40) in der Nähe mindestens eines Verbindungsmittels aufweist,
**dadurch gekennzeichnet, dass** der Halterahmen (5) mindestens ein Haltemittel (61, 62) der Elemente aufweist, die geeignet sind, sich durch Bruch an den vorab herausgetrennten Abschnitten (40) zu lösen.

2. Verschlussvorrichtung (1) nach Anspruch 1, **dadurch gekennzeichnet, dass** sie mindestens zwei Anordnungen von Klappen (3) aufweist, und dass der Halterahmen (5) mindestens eine Haltesäule (50) aufweist, die an mindestens einem Querstück des Halterahmens (5) befestigt ist, wobei das mindestens eine Querstück vorab herausgetrennte Abschnitte (40) in der Nähe mindestens einer Haltesäule (50) aufweist.

3. Verschlussvorrichtung (1) nach einem der vorhergehenden Ansprüche, **dadurch gekennzeichnet, dass** der Halterahmen (5) ferner vorab herausgetrennte Abschnitte (40) in der Nähe der Verbindungsmittel zwischen dem Halterahmen (5) und dem mindestens einen Steuerelement (13) aufweist.

4. Verschlussvorrichtung (1) nach einem der vorhergehenden Ansprüche, **dadurch gekennzeichnet, dass** das Haltemittel (61, 62) ein Anschlag (61) ist.

5. Verschlussvorrichtung (1) nach einem der Ansprüche 1 bis 3, **dadurch gekennzeichnet, dass** das Haltemittel (61, 62) ein Elastomermaterial (62) ist, das die vorab herausgetrennten Abschnitte (40) abdeckt.

6. Verschlussvorrichtung (1) nach einem der vorhergehenden Ansprüche, **dadurch gekennzeichnet, dass** die vorab herausgetrennten Abschnitte (40) Öffnungen sind, die durch den Halterahmen (5) hindurchgehen und punktiert angeordnet sind.

7. Frontmodul für ein Kraftfahrzeug umfassend eine Verschlussvorrichtung (1) nach einem der vorhergehenden Ansprüche.

## Claims

1. Shut-off device (1) for a motor vehicle front-end air inlet, comprising:
■ a support frame (5),
■ at least one flap (3) pivoting about a horizontal pivot axis (A) between a shut-off position and an open position, said at least one flap (3) being installed within the support frame (5), the support frame (5) comprising means of connection with said at least one flap (3) at a connection region (30),
■ at least one control element (13) governing the positioning of the flap(s) (3),
the support frame (5) comprising pre-cut-out portions (40) in the vicinity of at least one connection means,
**characterized in that** the support frame (5) comprises a least one means (61, 62) for retaining the elements capable of detaching by breaking at the pre-cut-out portions (40).

2. Shut-off device (1) according to Claim 1, **characterized in that** it comprises at least two sets of flaps (3), and **in that** the support frame (5) comprises at least one holding upright (50) fastened to at least one crossmember of said support frame (5), the at least one crossmember comprising pre-cut-out portions (40) in the vicinity of at least one holding upright (50).

3. Shut-off device (1) according to either one of the preceding claims, **characterized in that** the support frame (5) further comprises pre-cut-out portions (40) in the vicinity of the means of connection between said support frame (5) and the at least one control element (13).

4. Shut-off device (1) according to one of the preceding claims, **characterized in that** the retaining means (61, 62) is a stop (61).

5. Shut-off device (1) according to one of Claims 1 to 3, **characterized in that** the retaining means (61, 62) is an elastomer material (62) covering the pre-cut-out portions (40).

6. Shut-off device (1) according to one of the preceding claims, **characterized in that** the pre-cut-out potions (40) are orifices which pass through the support frame (5) and which are arranged as dotted lines.

7. Motor vehicle front-end module comprising a shut-off device (1) according to one of the preceding claims.
